# EUROPÄISCHE PATENTSCHRIFT

(11) **EP 1 153 536 B1**
(45) Veröffentlichungstag und Bekanntmachung des Hinweises auf die Patenterteilung: **09.03.2005**
(21) Anmeldenummer: 01110306.6
(22) Anmeldetag: 26.04.2001
(51) Int. Cl.: A01D 34/38

(54) **Steuerventil zum Umschalten einer hydraulischen Kolben-Zylinder-Einheit für den Antrieb eines oszillierenden Maschinenteils**
Control valve for switching a piston-cylinder unity for driving an oscillating tool
Valve de commande pour la commutation d'une unité piston-cylindre pour l'entraînement d'un outil oscillant

(30) Priorität: 12.05.2000 DE 10023340
(43) Veröffentlichungstag der Anmeldung: 14.11.2001
(73) Patentinhaber: CLAAS Industrietechnik GmbH, 33106 Paderborn (DE)
(72) Erfinder: Rhody, Karl-Thomas, 33165 Lichtenau (DE)

(56) Entgegenhaltungen:
- DE-A- 1 407 153
- DE-A- 1 904 778
- DE-C- 3 344 967
- DE-U- 8 209 146
- FR-A- 1 214 426

## Beschreibung

Die vorliegende Erfindung betrifft ein Steuerventil mit einem Gehäuse und in der zentralen Durchgangsbohrung des Gehäuses gelagertem axial verschiebbaren Ventilkolben zum Umschalten einer hydraulischen Kolben-Zylinder-Einheit für den oszillierenden Antrieb einer Arbeitseinheit, beispielsweise als Antrieb des Schneidmessers bei einer selbstfahrenden Erntemaschine, wobei die hydraulische Kolben-Zylinder-Einheit einerseits mit der Arbeitseinheit und andererseits mit der Arbeitsmaschine verbunden ist. Durch die DE 195 29 067.4 ist ein Vorsatzgerät für Halmguterntemaschinen, insbesondere Mähdrescher bekannt, mit einem Rahmen sowie als angetriebenen Elementen einem oszillierenden Messerbalken und einer rotierenden Haspel und Einzugsschnecke zur Weiterbeförderung des Erntegutes. Der Messerantrieb in Schneidwerken von Halmguterntemaschinen wird normalerweise mechanisch ausgeführt. Die entsprechenden Arbeitseinrichtungen und Getriebe hängen außen am Schneidwerk. Insbesondere bei größeren Schneidwerksbreiten müssen die Antriebe und Getriebe sehr leistungsfähig ausgelegt werden, um über die volle Arbeitsbreite eine sichere Schnittstellung des Messerbalkens zu gewährleisten, andererseits müssen die Antriebe und Getriebe auch den hohen oszillierenden Kräften standhalten können. Aus der zunehmenden Länge der Antriebsstrecken und der höheren leistungsmäßigen Dimensionierung ergeben sich hohe seitliche und in der Regel einseitige Gewichte mit großen Massenkräften, denen durch eine entsprechende konstruktive Auslegung des Schneidwerkes insgesamt Rechnung getragen werden muß. Auch ist der Kraftfluß von der Antriebsquelle bis zum Messer sehr weitläufig und aufwendig. Insgesamt haftet den herkömmlichen mechanischen Messerantrieben von Schneidwerken also der Nachteil an, schwere und aufwendige Anbindungskonstruktionen zu benötigen.

Um diesen Nachteil zu vermeiden, ist es beispielsweise durch die deutsche Gebrauchsmusterschrift 8209146.3 bekannt, Schneidmesser über eine hydraulische Kolbenzylindereinheit anzutreiben. Derartige Antriebe arbeiten an sich zufriedenstellend. Als kritischer Punkt bei derartigen Antrieben ist allerdings das Umschaltventil zu sehen, das den Ölstrom zu der hydraulischen Antriebseinheit ständig umkehrt. Bei den bekannten Lösungen werden derartige Ventile nämlich hydraulisch umgeschaltet. Eine solche Umschaltung setzt aber voraus, dass immer eine ausreichende Ölmenge und der erforderliche Druck vorhanden sind, um das Ventil in die jeweilige Endlage zu schalten und in dieser zu halten. Bricht beispielsweise der Versorgungsdruck zusammen, wenn sich das Umschaltventil in einer nicht definierten Zwischenstellung befindet, ist es ohne manuellen Eingriff kaum möglich, das System wieder in einen kontinuierlichen Arbeitsablauf zu bringen.

Der vorliegenden Erfindung liegt daher das Problem zugrunde, ein Steuerventil der eingangs näher bezeichneten Art so auszubilden, dass der Ventilkolben des Steuerventiles auch bei plötzlichem Druckabfall stets eine seiner beiden Endstellungen erreicht. Dies wird erfindungsgemäß dadurch erreicht, dass dem Ventilkolben im Bereich seiner beiden Enden jeweils ein Steuerschieber zugeordnet ist, die wechselseitig von dem mit der Arbeitseinheit verbundenen Kolbenzylindereinheit im Gehäuse mechanisch axial verschiebbar sind. Dabei bestehen die Steuerschieber aus je einem Stößel und je einer diese mit Spiel umgreifenden Hülse, wobei sich an den dem Ventilkolben abgewandten Enden der Stößel einerseits und an den äußeren Enden der Hülsen andererseits je eine Druckfeder abstützen und dass die Hülsen wechselseitig über die Druckfedern auf die Stößel einwirken, die ihrerseits den Ventilkolben wechselweise verschieben. Der Ventilkolben ist in jeder seiner beiden Schaltstellungen mittels einer federbelasteten Rastkugel sperrbar.

Weitere vorteilhafte Ausbildungen der Erfindung sind in den Unteransprüchen näher definiert.

Im folgenden soll die Erfindung anhand zweier Figuren näher erläutert werden. Dabei zeigt:
- Figur 1: instilisierter Form einen Mähbalken beziehungsweise Mähmesser in Verbindung mit dem erfindungsgemäßen Steuerventil in einer Endstellung und
- Figur 2: das in Figur 1 dargestellte Steuerventil in seiner anderen möglichen Endstellung, ebenfalls in Verbindung mit einer Mäheinrichtung.

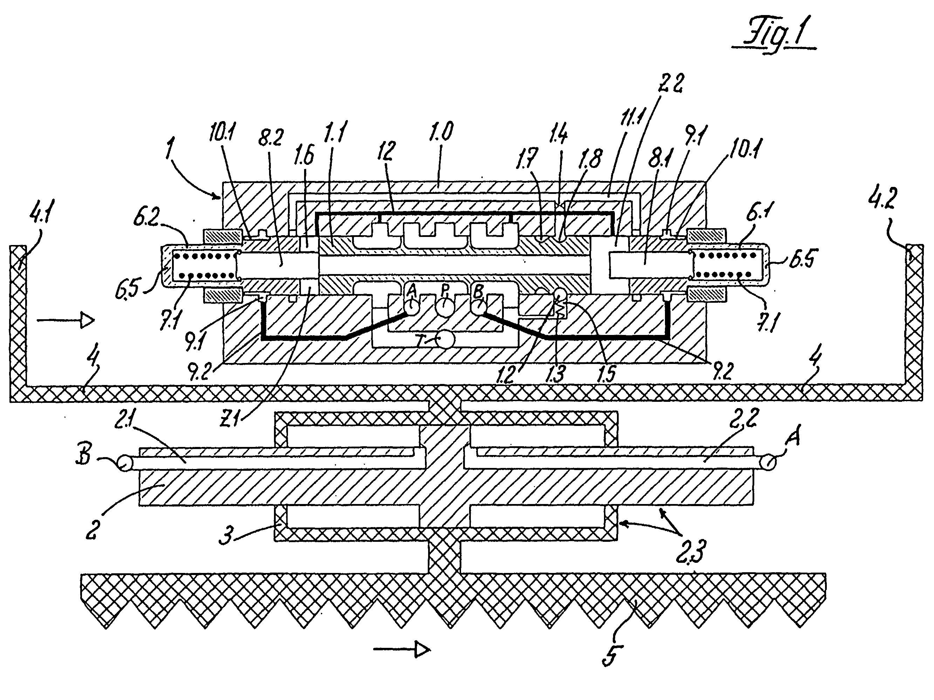

Die Zeichnungen zeigen eine hydraulische Kolbenzylindereinheit 2.3 mit Steuerventil zum Antrieb von Mähmessern. Die Einheit besteht aus einem mechanisch betätigten Wegeventil 1, das in den beiden Arbeitsstellungen selbsthemmend gerastet ist. Das Gehäuse 1.0 des Wegeventils 1 und die Kolbenstangen der hydraulischen Kolbenzylindereinheit sind am Rahmen des Schneidwerks befestigt. Der Zylinder 3 mit dem Betätigungsbügel 4 ist mit dem Mähmesser 5 verbunden. An dem Mähmesser 5 können mehrere hydraulische Kolbenzylindereinheiten angeordnet sein, die von ein und demselben Wegeventil versorgt werden. Die hydraulischen Kolbenzylindereinheiten sind dann durch Leitungen untereinander parallel verbunden. Hieraus erfolgt die Krafteinleitung gleichmäßig an mehreren Stellen. In der in Figur 1 dargestellten Lage ist die Leitung B des Wegeventils mit dem Anschluß B der hydraulischen Kolbenzylindereinheit verbunden, sinngemäß die Leitungen A. Die Ölzufuhr zu den beiden Zylinderräumen der hydraulischen Kolbenzylindereinheit 23 erfolgt über die Bohrungen 2.1 und 2.2.

### Funktionsweise:

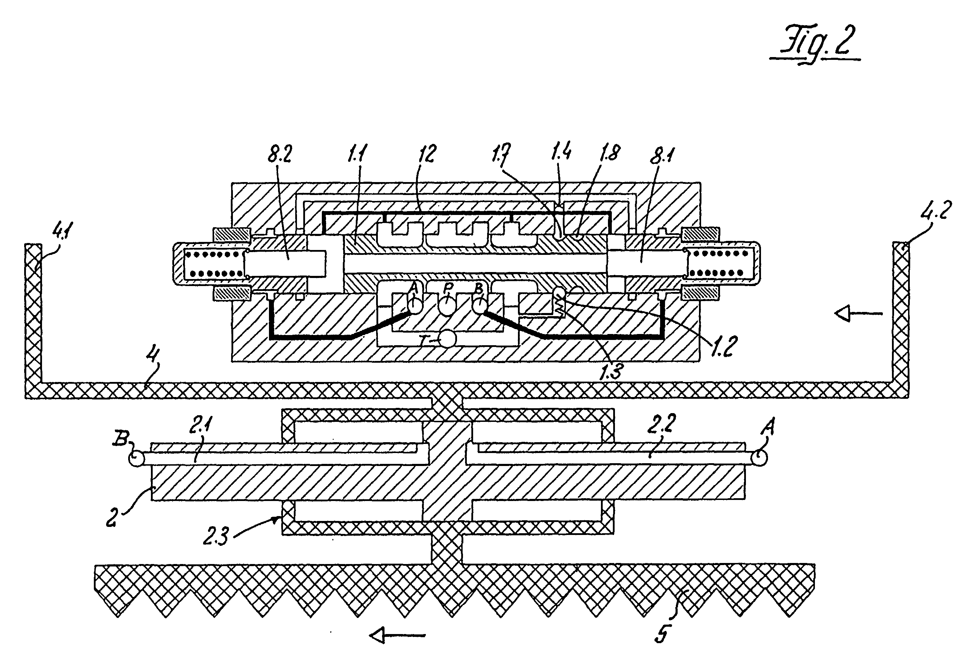

In der in Figur 1 dargestellten Lage wird der hydraulischen Kolbenzylindereinheit über die Bohrung 2.2 Öl zugeführt. Die Leitung 2.1 steht über dem Anschluß B mit dem Tank T in Verbindung. Das Messer 5 bewegt sich folglich nach rechts, bis das Bügelende 4.2 den Deckel 6.5 der Hülse 6.2 erreicht hat. Im Zuge der weiteren Bewegung des Bügelendes 4.2 wird die Hülse 6.2 in das Ventilgehäuse 1.0 gedrückt. Hierbei wird die Feder 7.1 gespannt, während der Stößel 8.2 am Ventilkolben 1.1 anliegt. Der Ventilkolben 1.1 ist zu diesem Zeitpunkt noch von der Raste 1.2 in Form einer Kugel in einer Feststellung arretiert. Im Zuge der weiteren Bewegung des Bügelendes 4.2 wird die Ringnut 10.1, die mit der Ringnut 9.1 verbunden ist, verschoben, bis sie den Steuerkanal 11.1 erreicht. Da die Ringnut 9.1 über die Steuerleitung 9.2 mit der Druckleitung A verbunden ist, wird nun die Raste 1.2, die mit der Feder 1.3 beaufschlagt ist, über die Blende 1.1 hydraulisch aus dem Sitz gedrückt. Der Stößel 8.2 schiebt den Ventilkolben 1.1 mittels der in der Feder 7.1 gespeicherten Energie in die entgegengesetzte Position, wobei der Ventilkolben 1.1 durch den gegenüberliegenden Stößel 8.1 federnd gebremst wird. Während des Durchschaltens sind in der Übergangsphase alle Anschlüsse negativ miteinander verbunden, so dass keine Druckspitzen wie bei einer positiven Überdeckung auftreten können. Durch die Druckentlastung fällt die Raste 1.2 über die Blende 1.4 verzögert in die neue Rastposition ein, wenn der Kolben 1.1 seine in Figur 2 dargestellte entgegengesetzte Position erreicht hat. Selbstverständlich sind die Blende 1.4, die Bohrung 1.5 und die Kraft der Feder 1.3 entsprechend groß ausgelegt. Unter Berücksichtung von Rast-Kräften können mehrere federnde Kugeln am Umfang angeordnet sein. Da während der Einschubbewegung der Hülse 6.2 nach links eine Volumenänderung im Gehäuse eintritt, sind beide Seiten über eine Ausgleichsleitung 12 rechts mit dem Tank verbunden und der Kolben 1.1 ist hohl gebohrt.

Der zuvor beschriebene Schaltvorgang wiederholt sich in umgekehrter Richtung in analoger Form.

Die Raste ist zeichnerisch als Kugel dargestellt, es können auch andere Rastkörper eingesetzt werden.

Dadurch, dass der Kolben 1.1 während der Vorspannphase der Feder 7.1 durch die Raste 1.2 in einer seiner Endstellungen arretiert ist, wird diese Stellung auch dann beibehalten, wenn plötzlich ein Druckabbau auftreten sollte. In dem Moment, in dem die Raste 1.2 hydraulisch aus ihrer Wirkstellung herausgedrückt ist, wird der Kolben 1.1 allein über die Kraft der vorgespannten Feder 7.1 axial bewegt. Auch in dieser Phase hat ein plötzlicher Druckabfall keine negativen Folgen, da die in der vorgespannten Feder 7.1 gespeicherte Energie allemal ausreicht, um den Kolben 1.1 in seiner andere Endstellung zu verschieben, in der dann der Kolben wiederum durch die Rastkugel fixiert wird.

### Bezugszeichenliste

### Steuerventil zum Umschalten einer hydraulischen Kolben-Zylinder-Einheit für den Antrieb eines Schneidmessers bei Mähdreschern

- 1: Wegeventil
- 1.0: Ventilgehäuse
- 1.1: Ventilkolben
- 1.2: Raste
- 1.3: Feder
- 1.4: Blende
- 1.5: Kugelbohrung/Bohrung
- 1.6: zentrale Durchgangsbohrung
- 1.7: Nut
- 1.8: Nut
- 2: Kolbenstangen
- 2.1: Bohrung
- 2.2: Bohrung
- 2.3: hydraulische Kolben-Zylinder-Einheit
- 3: Zylinder
- 4: Betätigungsbügel
- 4.1: Bügelende
- 4.2: Bügelende
- 5: Mähmesser
- 6.1: Hülse
- 6.2: Hülse
- 6.5: Deckel
- 7.1: Druckfedern
- 8.1: Stößel
- 8.2: Stößel
- 9.1: Ringnut
- 9.2: Steuerleitung
- 10.1: Ringnut
- 11.1: Steuerkanal/Kanal
- A: Anschluß
- B: Leitung/Druckölzuführ
- T: Tank
- Z1: Zylinderraum
- Z2: Zylinderraum

## Patentansprüche

1. Steuerventil mit einem Gehäuse (1) und in der zentralen Durchgangsbohrung (1.6) des Gehäuses gelagertem axial verschiebbaren Ventilkolben (1.1) zum Umschalten einer hydraulischen Kolben-Zylinder-Einheit (2.3) für den oszillierenden Antrieb einer Arbeitseinheit einer landwirtschaftlichen Erntemaschine, insbesondere des Mähmessers (5) bei einem selbstfahrenden Mähdrescher, wobei die hydraulische Kolben-Zylinder-Einheit (2.3) einerseits mit der Arbeitseinheit und andererseits mit der Arbeitsmaschine verbunden ist,
**dadurch gekennzeichnet,**
**dass** dem Ventilkolben (1.1) im Bereich seiner beiden Enden jeweils ein Steuerschieber zugeordnet ist, welche wechselweise von dem mit der Arbeitseinheit (5) verbundenen Teil der hydraulischen Kolben-Zylinder-Einheit (2.3) im Gehäuse mechanisch axial verschiebbar sind.

2. Steuerventil nach Anspruch 1,
**dadurch gekennzeichnet,**
**dass** die Steuerschieber aus je einem Stößel (8.1) und (8.2) und je einer diese mit Spiel umgreifenden Hülse (6.1) und (6.2) bestehen, wobei sich an den dem Ventilkolben (1.1) abgewandten Ende der Stößel (8.1) und (8.2) einerseits und an den äußeren Enden der Hülsen (6.1) und (6.2) andererseits je eine Druckfeder (7.1) abstützen und dass die Hülsen (6.1) und (6.2) wechselweise über die Druckfedern (7.1) auf die Stößel (8.1) und (8.2) einwirken, die ihrerseits den Ventilkolben (1.1) wechselweise verschieben.

3. Steuerventil nach den Ansprüchen 1 und 2,
**dadurch gekennzeichnet,**
**dass** der Ventilkolben (1.1) in jeder seiner beiden Schaltstellungen mittels einer federbelasteten Raste (1.2) sperrbar ist.

4. Steuerventil nach Anspruch 3,
**dadurch gekennzeichnet,**
**dass** der Ventilkolben (1.1) zwei mit den jeweiligen Schaltstellungen entsprechendem Abstand aneinanderangeordnete Nuten (1.7) und (1.8) versehen ist, wobei je nach Schaltstellung des Ventilkolbens (1.1) in eine der beiden Nuten eine Raste (1.2) mittels einer Feder (1.3) teilweise eingedrückt ist und dass sowohl die Feder (1.3) als auch die Raste (1.2) in einer von der zentralen Durchgangsbohrung (1.6) des Gehäuses (1) radial nach außen geführten Bohrung (1.5) gehalten sind.

5. Steuerventil nach den Ansprüchen 1 bis 4,
**dadurch gekennzeichnet,**
**dass** die Hülsen (6.1) und (6.2) an ihren äußeren Enden mit Deckeln (6.5) geschlossen sind, gegen die sich die Druckfedern (7.1) einendig abstützen.

6. Steuerventil nach einem oder mehreren der Ansprüche 1 bis 5,
**dadurch gekennzeichnet,**
**dass** jeweils die Nut (1.7) oder (1.8), in der die Raste (1.2) eingerastet ist, über einen Kanal (11.1) zum Zwecke des Lösens der Raste mit Drucköl beaufschlagbar ist.

7. Steuerventil nach einem oder mehreren der Ansprüche 1 bis 6,
**dadurch gekennzeichnet,**
**dass** durch das mechanische Verschieben einer Hülse (6.1) oder (6.2) einerseits der Ölstrom zu der Nut (1.7) beziehungsweise (1.8) freigegeben wird, in der die Raste (1.2) eingerastet ist und andererseits die Feder (7.1) vorgespannt wird, die auf den zugehörigen Stößel (8.1) oder (8.2) einwirkt zum Zwecke des Verschiebens des Ventilkolbens (1.1) nach dem Lösen der Raste (1.2).

8. Steuerventil nach einem oder mehreren der Ansprüche 1 bis 7,
**dadurch gekennzeichnet,**
**dass** in den Kanal (11.1) eine Blende (1.4) eingebaut ist.

9. Steuerventil nach einem oder mehreren der Ansprüche 1 bis 8,
**dadurch gekennzeichnet,**
**dass** die Nuten (1.7) und (1.8) schräg zum Nutgrund hin verlaufende Flächen aufweisen zwecks genauer Definition jeweils einer Schaltstellung des Ventilkolbens (1.1) durch die federbelastete Raste (1.2).

10. Steuerventil nach einem oder mehreren der Ansprüche 1 bis 9,
**dadurch gekennzeichnet,**
**dass** der Zylinder (3) der hydraulischen Kolben-Zylinder-Einheit sowohl mit dem Mähmesser (5) als auch mit einem Bügel (4) verbunden ist, dessen frei auslaufende Enden (4.1) beziehungsweise (4.2) Betätigungsanschläge für die Hülsen (6.1) beziehungsweise (6.2) bilden.

11. Steuerventil nach einem oder mehreren der Ansprüche 1 bis 10,
**dadurch gekennzeichnet,**
**dass** die Kolbenstangen (2) der hydraulischen Kolben-Zylinder-Einheit (2.3) rahmenfest und mit Axialbohrungen (2.1) und (2.2) versehen sind, die jeweils zu einer Zylinderseite des Kolbens führen.

12. Steuerventil nach einem oder mehreren der Ansprüche 1 bis 11,
**dadurch gekennzeichnet,**
**dass** jeweils nach Schaltstellung des Ventilkolbens (1.1) eine der Axialbohrungen (2.1) oder (2.2) mit der Druckölzufuhr (B) und eine mit der Tankrückleitung (T) verbunden ist.

13. Steuerventil nach einem oder mehreren der Ansprüche 1 bis 12,
**dadurch gekennzeichnet,**
**dass** die die beiden Zylinderräume (Z1) und (Z2), die von dem Ventilkolben (1.1) einerseits und den Steuerschiebern (6.1) und (8.1) beziehungsweise (6.2) und (8.2) begrenzt werden und Teile der Zentralbohrung (1.6) sind, miteinander über den Kanal (11.1) verbunden sind.

## Claims

1. A control valve comprising a housing (1) and an axially displaceable valve piston (1.1) mounted in the central through bore (1.6) of the housing for switching over a hydraulic piston-cylinder unit for the oscillating drive of a working unit of an agricultural harvester, in particular the mowing blade (5) in the case of a self-propelled combine harvester, wherein the hydraulic piston-cylinder unit (2.3) is connected on the one hand to the working unit and on the other hand to the working machine,
**characterised in that**
associated with the valve piston (1.1) in the region of its two ends is a respective control slider which are mechanically axially displaceable in the housing alternately by the part of the hydraulic piston-cylinder unit (2.3), which part is connected to the working unit (5).

2. A control valve according to claim 1 **characterised in that** the control sliders respectively comprise a plunger (8.1) and (8.2) and a respective sleeve (6.1) and (6.2) embracing same with a clearance, wherein a respective compression spring (7.1) is supported on the one hand at the ends of the plungers (8.1) and (8.2) which are remote from the valve piston (1.1) and on the other hand at the outer ends of the sleeves (6.1) and (6.2) and that the sleeves (6.1) and (6.2) act alternately by way of the compression springs (7.1) on the plungers (8.1) and (8.2) which in turn alternately displace the valve piston (1.1).

3. A control valve according to claims 1 and 2 **characterised in that** the valve piston (1.1) is lockable in each of its two switching positions by means of a spring-loaded latch (1.2).

4. A control valve according to claim 3 **characterised in that** the valve piston (1.1) is provided with two grooves (1.7) and (1.8) arranged relative to each other at a spacing corresponding to the respective switching positions, wherein depending on the respective switching position of the valve piston (1.1) a latch (1.2) is partially pressed by means of a spring (1.3) into one of the two grooves, and that both the spring (1.3) and also the latch (1.2) are held in a bore (1.5) which is passed radially outwardly from the central through bore (1.6) of the housing (1).

5. A control valve according to claims 1 to 4 **characterised in that** at their outer ends the sleeves (6.1) and (6.2) are closed by covers, against which the compression springs (7.1) bear at one end.

6. A control valve according to one or more of claims 1 to 5 **characterised in that** the respective groove (1.7) or (1.8) in which the latch (1.2) is latched can be supplied with oil under pressure by way of a passage (11.1) for the purposes of releasing the latch.

7. A control valve according to one or more of claims 1 to 6 **characterised in that** by mechanical displacement of a sleeve (6.1) or (6.2) on the one hand the flow of oil to the groove (1.7) or (1.8) respectively in which the latch (1.2) is latched is enabled and on the other hand the spring (7.1) which acts on the associated plunger (8.1) or (8.2) is prestressed for the purposes of displacement of the valve piston (1.1) after release of the latch (1.2).

8. A control valve according to one or more of claims 1 to 7 **characterised in that** a restrictor (1.4) is incorporated into the passage (11.1).

9. A control valve according to one or more of claims 1 to 8 **characterised in that** the grooves (1.7) and (1.8) have surfaces extending inclinedly with respect to the groove bottom for the purposes of accurate definition of a respective switching position of the valve piston (1.1) by the spring-loaded latch (1.2).

10. A control valve according to one or more of claims 1 to 9 **characterised in that** the cylinder (3) of the hydraulic piston-cylinder unit is connected both to the mowing blade (5) and also to a hoop member (4) whose freely terminating ends (4.1) and (4.2) respectively form actuating abutments for the sleeves (6.1) and (6.2) respectively.

11. A control valve according to one or more of claims 1 to 10 **characterised in that** the piston rods (2) of the hydraulic piston-cylinder unit (2.3) are fixed with respect to the frame and are provided with axial bores (2.1) and (2.2) which respectively lead to one cylinder side of the piston.

12. A control valve according to one or more of claims 1 to 11 **characterised in that** depending on the respective switching position of the valve piston (1.1) one of the axial bores (2.1) or (2.2) is connected to the pressure oil feed (B) and one is connected to the tank return line (T).

13. A control valve according to one or more of claims 1 to 12 **characterised in that** the two cylinder chambers (Z1) and (Z2) which are delimited by the valve piston (1.1) on the one hand and the control sliders (6.1), (8.1) and (6.2), (8.2) respectively and are parts of the central bore (1.6) are connected together by way of the passage (11.1).

## Revendications

1. Valve de commande comportant un corps (1) ainsi qu'un piston de valve (1.1), qui est monté coulissant dans la direction axiale dans le trou débouchant (1.6) central du corps, aux fins d'assureur la commutation d'un ensemble piston-cylindre hydraulique (2.3) pour l'entraînement oscillant d'une unité de travail d'une machine agricole de récolte, plus particulièrement de la lame de coupe (5) d'une moissonneuse-batteuse, l'ensemble piston-cylindre hydraulique (2.3) étant lié à l'unité d'entraînement d'une part et à la machine de travail d'autre part,
**caractérisée par le fait qu'**au piston de valve (1.1) est associé, dans la région de chacune des deux extrémités de celui-ci, un tiroir de commande qui est déplacé mécaniquement dans la direction axiale à l'intérieur du corps par la partie de l'ensemble piston-cylindre hydraulique (2.3) liée à l'unité d'entraînement (5).

2. Valve de commande selon la revendication 1, **caractérisée par le fait que** les tiroirs de commande comprennent chacun un poussoir (8.1) et (8.2) et un manchon (6.1) et (6.2) qui entoure ce dernier avec jeu, un ressort de compression (7.1) prenant appui d'une part sur l'extrémité du poussoir (8.1) et (8.2) éloignée du piston de valve (1.1) et d'autre part sur les extrémités extérieures des manchons (6.1) et (6.2), et **par le fait que** les manchons (6.1) et (6.2) par l'intermédiaire des ressorts de compression (7.1) agissent alternativement sur les poussoirs (8.1) et (8.2), qui à leur tour déplacent alternativement le piston de valve (1.1).

3. Valve de commande selon les revendications 1 et 2, **caractérisée par le fait que** le piston de valve (1.1) dans chacune de ses deux positions de commutation peut être bloqué par un cran (1.2) d'arrêt à ressort.

4. Valve de commande selon la revendication 3, **caractérisée par le fait que** le piston de valve (1.1) est pourvu de deux gorges (1.7) et (1.8) disposées à une distance lune de l'autre qui correspond aux positions de commutation concernées, un cran d'arrêt (1.2) étant en partie repoussé par un ressort (1.3) dans l'une des deux gorges selon la position du piston de valve (1.1) et **par le fait que** le ressort (1.3) et le cran d'arrêt (1.2) sont logés dans un trou (1.5), qui s'étend radialement en direction de l'extérieur à partir du trou débouchant (1.6) du corps (1).

5. Valve de commande selon les revendications 1 à 4, **caractérisée par le fait que** les manchons (6.1) et (6.2) au niveau de leurs extrémités extérieures sont fermés par des couvercles (6.5) contre lesquels une extrémité des ressorts de compression (7.1) prend appui.

6. Valve de commande selon une ou plusieurs des revendications 1 à 5, **caractérisée par le fait que** la gorge (1.7) ou (1.8) dans laquelle le cran d'arrêt (1.2) est enclenché peut être alimentée en huile sous pression aux fins de libérer le cran d'arrêt.

7. Valve de commande selon une ou plusieurs des revendications 1 à 6, **caractérisée par le fait que** par suite du déplacement mécanique d'un manchon (6.1) ou (6.2), d'une part le flux d'huile en direction de la gorge (1.7) ou (1.8) est libéré et d'autre part le ressort (7.1) est mis en précontrainte, lequel ressort agit sur le poussoir (8.1) ou (8.2) concerné aux fins de déplacer le piston de valve (1.1) après le déclenchement du cran d'arrêt (1.2).

8. Valve de commande selon une ou plusieurs des revendications 1 à 7, **caractérisée par le fait qu'**un diaphragme (1.4) est monté dans le canal 11.1)

9. Valve de commande selon une ou plusieurs des revendications 1 à 8, **caractérisée par le fait que** les gorges (1.7) et (1.8) présentent des surfaces inclinées en direction du fond de gorge pour une définition précise d'une position de commutation du piston de valve (1.1) à l'aide du cran d'arrêt (1.2) sollicité par ressort.

10. Valve de commande selon une ou plusieurs des revendications 1 à 9, **caractérisée par le fait que** le cylindre (3) de l'ensemble piston-cylindre est lié à la fois à la lame de coupe (5) et à un étrier (4) dont les extrémités libres (4.1) et (4.2) forment des butées d'actionnement pour les manchons (6.1) et (6.2).

11. Valve de commande selon une ou plusieurs des revendications 1 à 10, **caractérisée par le fait que** les tiges de piston (2) de l'ensemble piston-cylindre (2.3) sont solidaires du bâti et sont pourvues de trous axiaux (2.1) et (2.2) qui mènent chacun à une face du piston.

12. Valve de commande selon une ou plusieurs des revendications 1 à 11, **caractérisée par le fait que** selon la position de commutation du piston de valve (1.1), un des trous axiaux (2.1) ou (2.2) est relié à l'arrivée d'huile sous pression (B) et un des trous axiaux est relié à la conduite de retour au réservoir (T).

13. Valve de commande selon une ou plusieurs des revendications 1 à 12, **caractérisée par le fait que** les deux chambres de cylindre (Z1) et (Z2), qui sont délimitées par le piston de valve (1.1) d'une part et les tiroirs de commande (6.1) et (8.1) ou (6.2) et (8.2) d'autre part, et des portions du trou central (1.6) communiquent entre elles par le canal (11.1).
